(19) **Europäisches Patentamt / European Patent Office / Office européen des brevets**

(11) **EP 4 301 999 B1**

(12) **FASCICULE DE BREVET EUROPEEN**

(45) Date de publication et mention
de la délivrance du brevet:
**02.04.2025 Bulletin 2025/14**

(21) Numéro de dépôt: **22710152.4**

(22) Date de dépôt: **23.02.2022**

(51) Classification Internationale des Brevets (IPC):
**F16H 25/20** *(2006.01)*      **F16H 25/18** *(2006.01)*

(52) Classification Coopérative des Brevets (CPC):
**F16H 25/20; F16H 25/186;** F16H 25/2204;
F16H 2025/2075

(86) Numéro de dépôt international:
**PCT/IB2022/051579**

(87) Numéro de publication internationale:
**WO 2022/185148 (09.09.2022 Gazette 2022/36)**

(54) **ACTIONNEUR À GAIN MÉCANIQUE VARIABLE ET PROCÉDÉ ASSOCIÉ**

AKTUATOR MIT VARIABLER MECHANISCHER VERSTÄRKUNG UND ZUGEHÖRIGES VERFAHREN

ACTUATOR WITH VARIABLE MECHANICAL GAIN, AND ASSOCIATED METHOD

(84) Etats contractants désignés:
**AL AT BE BG CH CY CZ DE DK EE ES FI FR GB
GR HR HU IE IS IT LI LT LU LV MC MK MT NL NO
PL PT RO RS SE SI SK SM TR**

(30) Priorité: **03.03.2021 FR 2102077**

(43) Date de publication de la demande:
**10.01.2024 Bulletin 2024/02**

(73) Titulaire: **KENDRINOV S.A.**
**1630 Bulle (CH)**

(72) Inventeurs:
• **SALESSE, Christian**
**19340 La Roche Près Feyt (FR)**
• **LORIOT, Jean-Marc**
**75015 Paris (FR)**

(74) Mandataire: **Weihs, Bruno Konrad**
**André Roland SA**
**IP Attorneys & Services**
**Avenue Collonges 21**
**1004 Lausanne (CH)**

(56) Documents cités:
**WO-A1-02/076665      US-A- 3 298 659
US-A- 6 024 422**

## Description

### Domaine technique

L'invention concerne un actionneur à gain mécanique variable, et plus particulièrement un procédé d'optimisation des cinématiques relatives à l'actionneur à gain mécanique variable.

### Technique antérieure

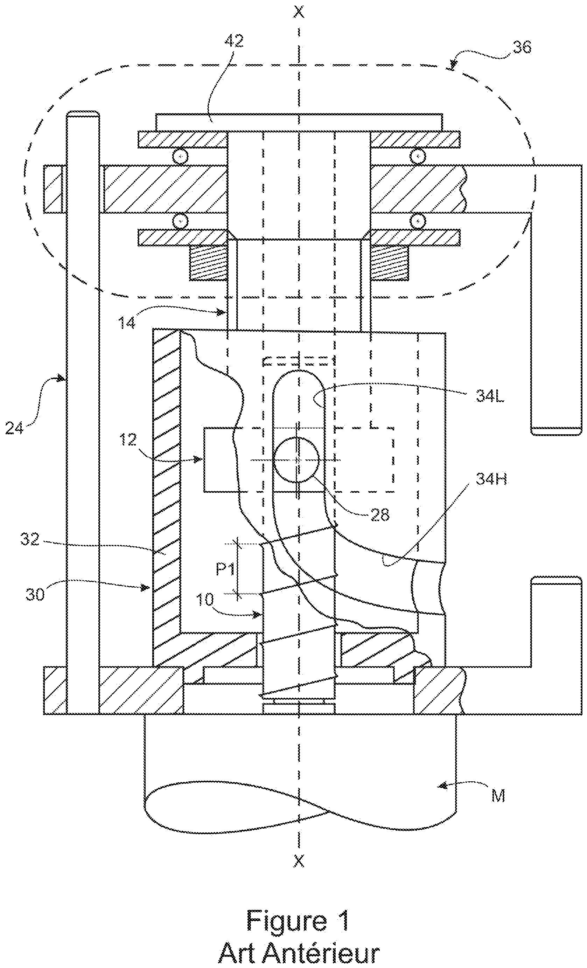

Il est connu de la publication européenne EP1370388B1 de procurer un dispositif d'entraînement pour le déplacement relatif de deux organes qui soit propre à fournir un rapport cinématique variable. Le dispositif d'entraînement est susceptible d'être commandé électriquement par un système à commande numérique. Ainsi le dispositif d'entraînement comprend comme illustré à la figure 1 :

une vis **10** d'un pas **P1** donné propre à être entraînée en rotation autour d'un axe, dans un sens ou dans un sens opposé, sous l'action d'un moteur **M,**
un écrou **12** coopérant avec la vis **10** et propre à être entraîné en translation dans la direction de l'axe de la vis **10,** l'écrou **12** étant solidaire en translation de l'un des deux organes,
une douille **32** entourant la vis **10** en direction axiale **X-X** de la vis **10,**
dans la douille **32**, des premiers moyens de guidage **34L** définissant un guidage linéaire parallèle à l'axe de la vis **10** pour bloquer la rotation de l'écrou **12** dans une première phase de déplacement de l'écrou **12,**
des seconds moyens de guidage **34H** définissant un guidage hélicoïdal qui s'étend suivant l'axe de la vis **10** et qui a un pas inversé par rapport au pas de la vis **10** pour permettre la rotation de l'écrou **12** dans le même sens de rotation que la vis **10** dans une deuxième phase de déplacement de l'écrou **12** où, par exemple, les deux organes sont plus proches l'un de l'autre que dans la première phase de déplacement,
ce qui permet de diminuer le pas apparent de la vis **10** et donc la vitesse en translation de l'écrou **12** dans cette deuxième phase de déplacement.

L'invention procure ainsi un dispositif d'entraînement à rapport cinématique variable, qui consiste en deux parties distinctes : une première partie où l'écrou **12** est bloqué en rotation et une deuxième partie où l'écrou **12** est entraîné en rotation dans le même sens que la vis **10.**

Grâce à la première partie, la vis **10** assure une liaison cinématique pendant une première phase, que l'on peut qualifier de phase inertielle du mouvement.

Pendant cette première phase, l'écrou **12** qui est monté libre en translation est guidé en rotation par les premiers moyens de guidage **34L** qui sont fixes et parallèles à l'axe de la vis **10** et qui empêchent donc l'écrou **12** de tourner, et ceci quel que soit le sens de rotation de la vis **10** et celui de l'effort à transmettre. Pendant cette phase inertielle qui permet le rapprochement ou l'éloignement des deux organes (par exemple, fermeture et ouverture d'une pince), la vis tournera généralement à vitesse établie constante. La vitesse de translation (vitesse linéaire) de l'écrou **12** est donc conditionnée par la vitesse angulaire et le pas de la vis **10.**

Pendant la seconde phase de déplacement, les seconds moyens de guidage définissent un guidage hélicoïdal **34H** qui oblige l'écrou **12** à tourner en rotation dans le même sens que la vis **10,** ce qui diminue le pas apparent de la vis **10.**

Par conséquent, en supposant que la vis tourne à la même vitesse angulaire que pendant la première phase du mouvement, l'écrou **12** se déplacera alors à une vitesse plus faible, imposée par le pas apparent. En effet, l'écrou **12** "libéré" du guidage linéaire des premiers moyens de guidage **34L** va suivre le pas des seconds moyens de guidage **34H.**

Ainsi, pendant cette seconde phase de déplacement, la vitesse de translation de l'écrou **12** diminue jusqu'à éventuellement devenir nulle. On a donc une variation apparente du pas jusqu'à l'obtention d'une valeur nulle de celui-ci, si nécessaire.

Dans le dispositif de l'art antérieur les crêtes des variations de l'effort de poussée désiré subissent des valeurs maximales de sorte que celles-ci imposent la définition du dispositif, requérant une valeur de couple moteur permettant d'atteindre les valeurs maximales du cycle.

### Problème technique

L'invention vise à optimiser les cinématiques définies dans le dispositif d'actionneur à gain mécanique variable de la technique antérieure décrite ci-dessus.

### Résumé de l'invention

Dans un premier aspect, l'invention prévoit un actionneur pour fournir un effort de poussée sur une course déterminée, comprenant un écrou, une vis, une douille configurée pour entourer la vis dans une direction axiale (X-X) de la vis, une pluralité de galets, l'écrou étant configuré pour coopérer avec la vis, l'écrou étant solidaire des galets, libres en rotation, les galets étant configurés pour se déplacer chacun notamment dans l'un d'au moins un guidage hélicoïdal de la douille, la vis étant configurée pour que lorsqu'elle est tournée faire fonctionner l'actionneur, pour entrainer en rotation l'écrou quand il s'appuie par l'intermédiaire des galets sur un profil du guidage hélicoïdal et avancer ainsi dans la direction axiale (X-X) de la vis plus ou moins vite suivant une pente du profil du guidage hélicoïdal. L'actionneur comprend en outre un moteur configuré pour tourner la vis. Des valeurs successives de la pente tout au long du ou des profils de respectivement l'un ou plusieurs des guidages hélicoïdaux sont adaptées pour faire en sorte que la pente compense systématiquement au moins une crête de l'effort de poussée désiré afin de faire un écrêtage des valeurs maximales de l'effort de poussée de sorte que le moteur, la vis et l'écrou sont dimensionnés sur une valeur de couple moteur correspondant à la valeur de l'effort de poussée après écrêtage.

Dans un mode de réalisation préféré, la pente tout au long du profil du guidage hélicoïdal est en chacun de ses points inversement proportionnelle à l'effort destiné à être à fournir à chacun des points respectifs, configurant ainsi l'actionneur pour qu'un couple moteur à fournir sur la vis pour obtenir l'effort destiné à être fourni est constant et égal à une valeur moyenne qui dans le déplacement amène l'énergie nécessaire à la réalisation de l'opération de déplacement.

Dans encore un autre mode de réalisation préféré, la pente tout au long du profil du guidage hélicoïdal est configurée pour suivre une loi hyperbolique ce qui, configurant ainsi l'actionneur pour qu'en appliquant un couple constant sur la vis, cela donne une force appliquée par l'actionneur qui croit linéairement de 0 à sa valeur maximale.

Dans encore un autre mode de réalisation préféré, l'actionneur comporte l'un ou les plusieurs guidages hélicoïdaux, et en outre aucun, un ou plusieurs guidages rectilignes, chaque guidage hélicoïdal ayant son propre profil de pente variable, le nombre et la répartition desdits guidages rectilignes et hélicoïdaux de l'actionneur, ainsi que le profil de chacun des guidages hélicoïdaux individuellement étant déterminés en fonction du positionnement et de la valeur de différentes charges sur la course de l'actionneur.

Selon un deuxième aspect, l'invention prévoit un procédé d'optimisation d'au moins une pente du profil d'un guidage hélicoïdal dans un actionneur tel que décrit ci-dessus, comprenant une définition d'une fonction F(y) d'une force F à fournir par l'actionneur en fonction de la course y parcourue par l'actionneur ; une détermination de la pente Py du guidage hélicoïdal à chaque position y comme étant inversement proportionnelle à la force F(y) à cette position y, pour un couple constant C du moteur (M) selon la formule Py = C / F(y) ; et une détermination d'une valeur énergétique prédéterminée $E_\omega$ en Joules à fournir sur une rotation de l'écrou de ω radians comme étant liée avec le couple constant C en Newton-mètre selon la formule $C = E_\omega / \omega$.

## Brève description des dessins

L'invention sera mieux comprise au moyen de la description détaillée d'exemples de modes de réalisation de l'invention, et en référence aux figures, dans lesquelles

[Fig 1] illustre un dispositif d'actionneur à gain mécanique variable de l'art antérieur ;

[Fig 2] contient un graphe montrant une force F qui varie linéairement de 0 à 10 000 N sur une course de 2 mm selon un exemple de l'invention ;

[Fig 3] contient un graphe illustrant la pente d'un guidage dans un dispositif d'actionneur à gain mécanique, en fonction de la course selon un exemple de l'invention ;

[Fig 4] contient un graphe illustrant le profil du guidage obtenu en appliquant le calcul de la pente de la figure 3 sur une rotation de 2,5 radians ;

[Fig 5] contient un graphe illustrant un couple moteur constant en fonction d'un angle ; et

[Fig 6] contient un organigramme pour illustrer un procédé d'optimisation d'au moins une pente du profil d'un guidage hélicoïdal dans un actionneur.

Des mêmes références peuvent être utilisées pour désigner les mêmes éléments ou des éléments similaires qui apparaissent dans plusieurs figures.

## Description détaillée

L'optimisation des cinématiques définies dans le dispositif d'actionneur à gain mécanique variable décrit dans la publication EP1370388B1 se fait par une variation du gain mécanique de la cinématique, ce qui correspond à l'adjonction d'un paramètre de réglage supplémentaire par rapport au dispositif de l'art antérieur. La figure 1 reprend des éléments de base connus du brevet EP1370388B1 précité.

Un moteur **M** actionne directement une vis à billes **10** dans un premier organe **30**. La vis à billes **10** doit avoir un très bon rendement inverse. Un écrou **12** collabore avec la vis à billes **10,** cet écrou **12** est solidaire d'une première pièce **14** qui transmet la poussée à un sous-ensemble **36** qui est en fait un deuxième organe qui délivre une poussée de sortie. Des butées à billes et un guidage **24** assurent le guidage d'une deuxième pièce **42** du deuxième organe qui assure un effort de poussée de sortie sur une course déterminée (la course déterminée n'est pas illustrée dans la figure 1). L'écrou **12** porte également une pluralité de galets **28** qui lui sont solidaires mais libres en rotation. Les galets **28** roulent chacun dans un guidage qui peut avoir une partie rectiligne **34L,** et qui a une partie hélicoïdale **34H** dont le pas est inversé par rapport à celui de la vis à billes **10.** C'est la partie hélicoïdale **34H** des guidages qui assure la quasi-totalité de la génération d'effort pour lequel l'appareil a été conçu, la partie rectiligne **34L** assurant essentiellement l'approche.

Le pas de la vis **10** est grand de sorte que son rendement inverse est bon et qu'un effort axial appliqué sur l'écrou **12** est suffisant pour entraîner la rotation de l'écrou **12** sur la vis **10.** Cela permet de considérer - dans l'analyse qui suit- que l'effort axial généré par la vis **10** est négligeable par rapport à l'effort axial produit par les galets **28** quand ces galets **28** sont dans les guidages hélicoïdaux **34 H.** Quand les galets **28** sont dans les guidages hélicoïdaux **34 H,** la rotation de l'écrou **12** par rapport à la vis **10** permet le déplacement de l'écrou **12** pour le laisser suivre le profil du guidage **34H.**

La présente invention implique une analyse de la pente tout au long du profil de la partie hélicoïdale **34H** des guidages afin d'adapter les variations de la pente tout au long du profil de ces guidages à l'effort à fournir et d'optimiser ainsi la cinématique et la motorisation pour rendre l'ensemble moteur cinématique du dispositif d'actionneur à gain mécanique variable le plus petit, le plus léger, le plus performant et le moins cher possible.

En adaptant les valeurs successives de la pente tout au long du profil des guidages **(34H)** pris ponctuellement, l'objectif est de faire en sorte que les guidages **(34H)** compensent systématiquement les crêtes de l'effort de poussée désiré afin de faire un véritable écrêtage des valeurs maximales du couple moteur de sorte que contrairement au dispositif de l'art antérieur, ce ne soient pas ces valeurs crêtes qui en imposent la définition. Cette valeur maximale de couple moteur sera donc systématiquement plus faible que celle établie avec une cinématique normale qui correspondrait aux valeurs crêtes du cycle.

L'ensemble moteur cinématique ainsi défini sera donc plus léger, plus petit donc moins cher que le système de l'art antérieur, le moteur comportera moins d'aimants (terres rares - samarium cobalt). Par ailleurs, le niveau inertiel de l'ensemble moteur cinématique plus faible conférera à cet ensemble un niveau de performance, notamment pour la bande passante, bien supérieur.

Si on peut ramener au moteur un couple constant, celui-ci aura la valeur moyenne correspondant au transfert, dans la course du cycle, de l'énergie nécessaire à la réalisation de la fonction attendue, il correspond donc à la valeur minimale possible dudit couple moteur.

En règle générale, si on ramène au moteur un couple constant, on devra prévoir des variations ponctuelles de la pente des guidages inversement proportionnelles à celles de l'effort à délivrer.

Ainsi, si l'effort à délivrer est proportionnel à la course, la pente des guidages **34H** aura une loi hyperbolique, afin que le produit de la force par la pente reste constant.

Ainsi l'invention vise à optimiser le profil des guidages **34H,** cette variation des valeurs successives de la pente tout au long du profil de ces guidages, donc du gain mécanique de la chaîne cinématique, correspond à un réel paramètre de réglage supplémentaire par rapport au dispositif de l'art antérieur. C'est cette spécificité qui permet d'assurer la fonction attendue avec un moteur et une cinématique plus légère, moins chère et plus performante que celle susceptible d'être réalisée avec le système de l'art antérieur.

Un même actionneur peut comporter aucun, un ou plusieurs secteurs rectilignes ou guidages rectilignes **34L** et un ou plusieurs secteurs à pente variable ou guidages hélicoïdaux **34H,** chaque secteur à pente variable **34H** pouvant avoir individuellement son propre profil. Le nombre et la répartition desdits secteurs rectilignes **34L** et à pente variable **34H** dudit actionneur, ainsi que le profil de chacun des secteurs à pente variable **34H** individuellement, sont déterminés en fonction du positionnement et de la valeur des différentes charges sur la course de la charge à entraîner.

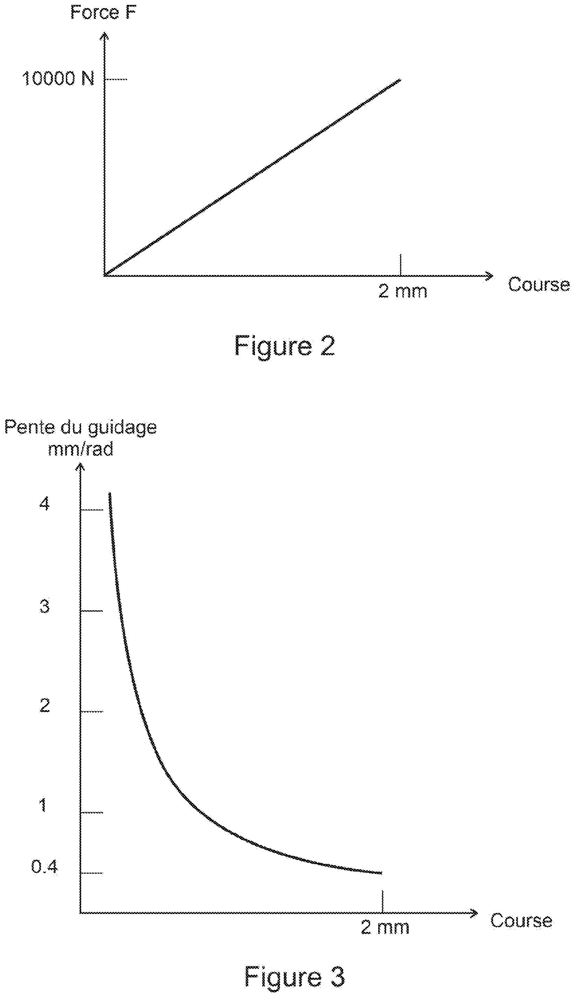

La figure 2, donnée à titre d'exemple, montre une force F qui varie linéairement de 0 à 10000 N sur une course de 2 mm.

Dans cet exemple, la force est donnée par la formule mathématique :

$$F = K \times Y$$

où

- F est la force en Newtons ;
- K est le coefficient de la fonction en Newtons par mètre - dans l'exemple $5 \cdot 10^6$ Newtons par mètre ;
- Y est la course en mètres - dans l'exemple 0.002 m ; et
- x est le signe "multiplié par".

Suivant l'invention, la pente du guidage en un point donné est inversement proportionnelle à la force à ce point et la formule mathématique est

$$Py = C / Fy$$

où

- Py est la pente du guidage à la position Y en mètres par radian ;
- C est le couple moteur en Newton mètre ;
- Fy est la force à la position Y en Newton ; et
- / est le signe de "divisé par".

L'énergie W est l'intégrale de la fonction $5 \cdot 10^6$ * Y, Y variant de 0 à 0.002 m, soit $5 \cdot 10^6 * (0.002)^2 / 2 = 10$ Joules.

Pour obtenir une valeur énergétique de 10 Joules sur une rotation de 2.5 radians à couple constant, ce couple constant doit être de 10 Joules / 2,5 radians = 4 Newton mètre.

Avec cette valeur du couple de 4 Newton mètre, la pente du guidage peut être calculée en tout point. Et par exemple les points suivants :

- à la position Y = 1 mm (mi-course), la force est de 5000 N donc la pente du guidage est égale à 4 / 5000 = 0.0008 m/radian ;
- à la position Y = 2 mm (fin de course), la force est de 10000 N donc la pente du guidage est égale à 4 / 10000 = 0,0004 m/radian.

La figure 3 représente la pente du guidage en fonction de la course.

Le début de la course, quand la pente du guidage est supérieure à 4 mm/rad, n'est pas représenté. En effet, pour les très faibles valeurs de la force F, théoriquement la pente de la courbe devient très grande. Mais dans la pratique et dans le cadre du dispositif de l'art antérieur, le profil du guidage devient rectiligne et parallèle à la vis, et quand les guidages sont rectilignes, c'est la vis qui assure le déplacement de la charge. Avec une pente de vis de 4 mm/radian, la force supportée et fournie par la vis est de 4 Nm / 0.004 = 1000 N, soit 1/10ème de la force maximale.

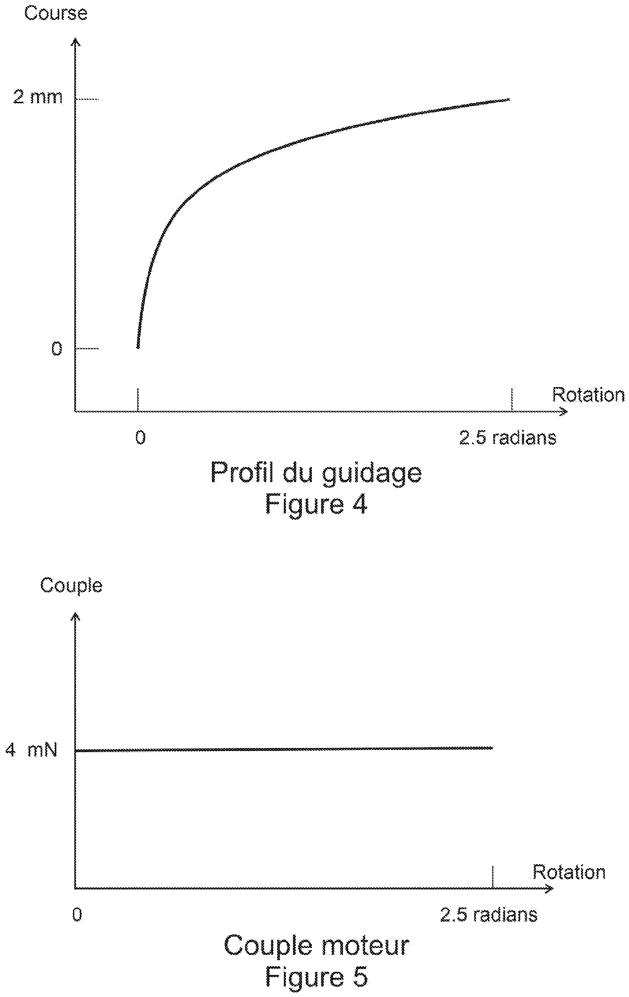

La figure 4 représente le profil du guidage obtenu en appliquant le calcul de la pente de la figure 3 sur une rotation de 2,5 radians. Le point 0,0 est décalé des axes pour plus de clarté.

Le profil du guidage représenté permet à un couple constant de 4 Nm et en faisant tourner les galets dans le guidage sur 2,5 radians, d'appliquer une force croissante de 0 à 10000 N sur un déplacement de 2 mm.

La figure 5 représente le couple moteur qui est constant.

D'autres exemples pourraient être donnés, comme une force variant sinusoïdalement. C'est le cas d'un volet ou d'une gouverne aéronautique qui tourne autour d'un axe perpendiculaire au flux d'air, l'axe d'un volet est horizontal et l'axe d'une gouverne est vertical. Le maître-couple d'un volet ou d'une gouverne (la surface exposée au flux d'air) varie sinusoïdalement au fur et à mesure que la position angulaire du volet ou de la gouverne augmente. La force exercée par le flux d'air est proportionnelle au maître-couple et varie donc sinusoïdalement avec l'angle. Pour faire tourner le volet ou la gouverne, un actionneur linéaire agit sur un point situé à une certaine distance de l'axe de rotation. La force que doit exercer l'actionneur est sinusoïdale et il sera très intéressant d'appliquer la présente invention. Dans tous les cas, le calcul de la pente du guidage en chaque point s'effectue en divisant le couple moteur par la force en ce point, le moteur peut être dimensionné sur la valeur moyenne.

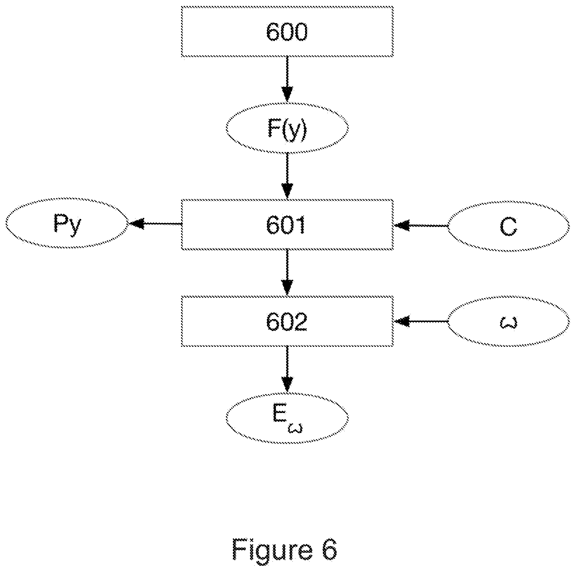

La figure 6 contient un organigramme pour illustrer le procédé d'optimisation d'au moins une pente du profil d'un guidage hélicoïdal dans un actionneur tel que décrit ci-dessus. Le procédé comprend les étapes suivantes :

une définition **600** d'une fonction F(y) d'une force F à fournir par l'actionneur en fonction de la course y parcourue par l'actionneur ;
une détermination de la pente **601** Py du guidage hélicoïdal à chaque position y comme étant inversement proportionnelle à la force F(y) à cette position y, pour un couple constant C du moteur (M) selon la formule Py = C / F(y) ;

une détermination d'une valeur énergétique prédéterminée **602** $E_\omega$ en Joules à fournir sur une rotation de ω radians de l'écrou **12** comme étant lié avec le couple constant C en Newton-mètre selon la formule C = $E_\omega$ / ω.

## Revendications

1. Actionneur pour fournir un effort de poussée sur une course déterminée, comprenant

   un écrou (12),
   une vis (10),
   une douille (32) configurée pour entourer la vis (10) dans une direction axiale (X-X) de la vis (10),
   une pluralité de galets (28),
   l'écrou (12) étant configuré pour coopérer avec la vis (10), l'écrou (12) étant solidaire des galets (28), libres en rotation, les galets (28) étant configurés pour se déplacer chacun notamment dans l'un d'au moins un guidage hélicoïdal (34H) de la douille (32),
   la vis (10) étant configurée pour que lorsqu'elle est tournée faire fonctionner l'actionneur, pour entrainer en rotation l'écrou (12) quand il s'appuie par l'intermédiaire des galets (28) sur un profil du guidage hélicoïdal (34H) et avancer ainsi dans la direction axiale (X-X) de la vis (10) plus ou moins vite suivant une pente du profil du guidage hélicoïdal (34H),
   l'actionneur comprenant en outre
   un moteur (M) configuré pour tourner la vis (10),
   **caractérisé en ce que**,
   des valeurs successives de la pente tout au long du ou des profils de respectivement l'un ou plusieurs des guidages hélicoïdaux (34H) sont adaptées pour faire en sorte que la pente compense systématiquement au moins une crête de l'effort de poussée désiré afin de faire un écrêtage des valeurs maximales de l'effort de poussée de sorte que le moteur, la vis (10) et l'écrou (12H) sont dimensionnés sur une valeur de couple moteur correspondant à la valeur de l'effort de poussée après écrêtage.

2. Actionneur selon la revendication 1, dans lequel la pente tout au long du profil du guidage hélicoïdal (34H) est en chacun de ses points inversement proportionnelle à l'effort destiné à être à fournir à chacun des points respectifs, configurant ainsi l'actionneur pour qu'un couple moteur à fournir sur la vis (10) pour obtenir l'effort destiné à être fourni est constant et égal à une valeur moyenne qui dans le déplacement amène l'énergie nécessaire à la réalisation de l'opération de déplacement.

3. Actionneur selon la revendication 1 ou 2, dans lequel la pente tout au long du profil du guidage hélicoïdal (34H) est configurée pour suivre une loi hyperbolique ce qui, configurant ainsi l'actionneur pour qu'en appliquant un couple constant sur la vis (10), cela donne une force appliquée par l'actionneur qui croit linéairement de 0 à sa valeur maximale.

4. Actionneur selon la revendication 1, dans lequel l'actionneur comporte l'un ou les plusieurs guidages hélicoïdaux (34H), et en outre un ou plusieurs guidages rectilignes (34L), chaque guidage hélicoïdal (34H) ayant son propre profil de pente variable, le nombre et la répartition de l'un ou des plusieurs guidages rectilignes (34L) et le nombre et la répartition de l'un ou des plusieurs guidages hélicoïdaux (34H) de l'actionneur, ainsi que le profil de chacun des guidages hélicoïdaux (34H) individuellement étant déterminés en fonction du positionnement et de la valeur de différentes charges sur la course de l'actionneur.

5. Procédé d'optimisation d'au moins une pente du profil d'un guidage hélicoïdal (34H) dans un actionneur tel que décrit dans l'une quelconque des revendications 1 à 4, comprenant

une définition d'une fonction F(y) d'une force F à fournir par l'actionneur en fonction de la course y parcourue par l'actionneur;
une détermination de la pente Py du guidage hélicoïdal à chaque position y comme étant inversement proportionnelle à la force F(y) à cette position y, pour un couple constant C du moteur (M) selon la formule $P_y = C / F(y)$;
une détermination d'une valeur énergétique prédéterminée $E_\omega$ en Joules à fournir sur une rotation de l'écrou de $\omega$ radians comme étant liée avec le couple constant C en Newton-mètre selon la formule $C = E_\omega / \omega$.

**Patentansprüche**

1. Aktuator zur Bereitstellung einer Schubkraft über einen vorgegebenen Weg, beinhaltend

eine Mutter (12),
eine Schraube (10),
eine Buchse (32), die dazu konfiguriert ist, die Schraube (10) in einer axialen Richtung (X-X) der Schraube (10) zu umgeben,
eine Vielzahl von Rollen (28),
wobei die Mutter (12) dazu konfiguriert ist, mit der Schraube (10) zusammenzuwirken, wobei die Mutter (12) mit den Rollen (28), die frei drehbar sind, fest verbunden ist, wobei die Rollen (28) dazu konfiguriert sind, sich jeweils insbesondere in einer von mindestens einer schraubenförmigen Führung (34H) der Buchse (32) zu bewegen,
wobei die Schraube (10), wenn sie gedreht wird, dazu konfiguriert ist, den Aktuator zu betreiben, die Mutter (12), wenn sich diese mittels der Rollen (28) an einem Profil der schraubenförmigen Führung (34H) abstützt, in Drehung zu versetzen und sich so in der axialen Richtung (X-X) der Schraube (10) mehr oder weniger schnell gemäß einer Steigung des Profils der schraubenförmigen Führung (34H) fortzubewegen, wobei der Aktuator ferner Folgendes beinhaltet:

einen Motor (M), der dazu konfiguriert ist, die Schraube (10) zu drehen,
**dadurch gekennzeichnet, dass**
aufeinanderfolgende Werte der Steigung entlang der gesamten Länge des oder der Profile jeweils einer oder mehrerer schraubenförmigen Führungen (34H) dazu angepasst sind, dafür zu sorgen, dass die Steigung systematisch mindestens eine Spitze der gewünschten Schubkraft kompensiert, um eine Spitzenwertbegrenzung der maximalen Werte der Schubkraft vorzunehmen, sodass der Motor, die Schraube (10) und die Mutter (12H) auf einen Motordrehmomentwert ausgelegt sind, der dem Wert der Schubkraft nach der Spitzenwertbegrenzung entspricht.

2. Aktuator nach Anspruch 1, wobei
die Steigung über die gesamte Länge des Profils der schraubenförmigen Führung (34H) an jedem ihrer Punkte umgekehrt proportional zu der Kraft ist, die an jedem der jeweiligen Punkte bereitgestellt werden soll, sodass der Aktuator auf diese Weise so konfiguriert ist, dass ein der Schraube (10) zur Erlangung der bereitzustellenden Kraft bereitzustellendes Motordrehmoment konstant und gleich einem Mittelwert ist, der während der Bewegung die zur Durchführung des Bewegungsvorgangs benötigte Energie zuführt.

3. Aktuator nach Anspruch 1 oder 2, wobei
die Steigung über die gesamte Länge des Profils der schraubenförmigen Führung (34H) dazu konfiguriert ist, einem hyperbolischen Gesetz zu folgen, sodass der Aktuator auf diese Weise so konfiguriert ist, dass bei Anwendung eines konstanten Drehmoments auf die Schraube (10) sich daraus eine durch den Aktuator ausgeübte Kraft ergibt, die von 0 bis zu ihrem Maximalwert linear ansteigt.

4. Aktuator nach Anspruch 1, wobei
der Aktuator die eine oder die mehreren schraubenförmigen Führungen (34H) und ferner eine oder mehrere geradlinige Führungen (34L) umfasst, wobei jede schraubenförmige Führung (34H) ihr eigenes Profil mit variabler Steigung aufweist, wobei die Anzahl und die Verteilung der einen oder der mehreren geradlinigen Führungen (34L) und die Anzahl und die Verteilung der einen oder der mehreren schraubenförmigen Führungen (34H) des Aktuators sowie das Profil jeder der schraubenförmigen Führungen (34H) individuell in Abhängigkeit von der Positionierung und dem Wert unterschiedlicher Lasten auf dem Weg des Aktuators bestimmt werden.

5. Verfahren zur Optimierung mindestens einer Steigung des Profils einer schraubenförmigen Führung (34H) in einem Aktuator nach einem der Ansprüche 1 bis 4, beinhaltend

> das Definieren einer Funktion F(y) einer durch den Aktuator bereitzustellenden Kraft F in Abhängigkeit von dem durch den Aktuator zurückgelegten Weg y;
> das Bestimmen der Steigung Py der schraubenförmigen Führung an jeder Position y als umgekehrt proportional zu der Kraft F(y) an dieser Position y, für ein konstantes Drehmoment C des Motors (M) gemäß der Formel Py = C / F(y);
> das Bestimmen eines vorgegebenen Energiewerts $E_\omega$ in Joules, der über eine Drehung der Mutter von $\omega$ Radianten bereitzustellen ist, als mit dem konstanten Drehmoment C in Newtonmeter gemäß der Formel C = $E_\omega$ / $\omega$ in Beziehung stehend.

**Claims**

1. Actuator for producing a thrust force over a particular travel, comprising

> a nut (12),
> a screw (10),
> a bush (32) configured to surround the screw (10) in an axial direction (X-X) of the screw (10),
> a plurality of rollers (28),
> the nut (12) being configured to cooperate with the screw (10), the nut (12) being fastened to the rollers (28), free to rotate, each roller (28) being configured to move in particular in one of at least one helical guide (34H) of the bush (32),
> the screw (10) being configured so that when it is turned it causes the actuator to function to drive the nut (12) in rotation when it bears via the rollers (28) on a profile of the helical guide (34H) and therefore to advance in the axial direction (X-X) of the screw (10) more or less quickly depending on the slope of the profile of the helical guide (34H),
> the actuator further comprising

> a motor (M) configured to turn the screw (10),
> **characterized in that**
> successive values of the slope all along the profile or profiles of one or more respective helical guides (34H) are such that the slope systematically compensates at least one peak of the desired thrust force in order to clip maximum values of the thrust force so that the motor, the screw (10) and the nut (12H) are sized for a motor torque value corresponding to the value of the thrust force after clipping.

2. Actuator according to Claim 1 in which the slope all along the profile of the helical guide (34H) is at each point inversely proportional to the force to be supplied at each of the respective points, thus configuring the actuator so that a motor torque to be applied to the screw (10) to obtain the force intended to be supplied is constant and equal to a mean value which in movement provides the energy necessary to carry out the movement operation.

3. Actuator according to Claim 1 or 2 in which the slope all along the profile of the helical guide (34H) is configured to follow a hyperbolic law which, by therefore configuring the actuator so that applying a constant torque to the screw (10) produces a force applied by the actuator that increases linearly from 0 to its maximum value.

4. Actuator according to Claim 1 in which the actuator includes a helical guide (34H) or a plurality thereof and one or more rectilinear guides (34L), each helical guide (34H) having its own variable slope profile, the number and the distribution of the one or more rectilinear guides (34L) and the number and the distribution of the one or more helical guides (34H) of the actuator and the profile of each individual helical guide (34H) being determined as a function of the position and the value of various loads along the travel of the actuator.

5. Method of optimizing at least one slope of the profile of a helical guide (34H) in an actuator as defined in any one of Claims 1 to 4, comprising

> definition of a function F(y) of a force F to be supplied by the actuator as a function of the travel y travelled by the actuator;
> determination of the slope Py of the helical guide at each position y as being inversely proportional to the force F(y) at that position y for a constant torque C of the motor (M) in accordance with the formula Py = C / F(y);
> determination of a predetermined energy value $E_\omega$ in Joules to be supplied over one rotation of the nut by $\omega$ radians as being linked to the constant torque C in Newton metres in accordance with formula $C = E_\omega / w$.

Figure 1
Art Antérieur

Figure 2

Figure 3

Course

2 mm

0

Rotation

0                                    2.5 radians

Profil du guidage
Figure 4

Couple

4 mN

Rotation

0                                    2.5 radians

Couple moteur
Figure 5

Figure 6

**EP 4 301 999 B1**

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- EP 1370388 B1